# FASCICULE DE BREVET EUROPEEN

(11) **EP 1 532 720 B1**
(45) Date de publication et mention de la délivrance du brevet: **15.04.2009**
(21) Numéro de dépôt: 03761656.2
(22) Date de dépôt: 27.06.2003
(51) Int. Cl.: H02J 7/00

(54) **CHARGEUR ET DISPOSITIF DE RECHARGE**
LADER UND LADEVORRICHTUNG
CHARGER AND RECHARGE DEVICE

(30) Priorité: 01.07.2002 FR 0208192
(43) Date de publication de la demande: 25.05.2005
(73) Titulaire: FRANCE TELECOM, 75015 Paris (FR)
(72) Inventeur: DAMLAMIAN, Jean-Jacques, F-92140 Clamart (FR); MARQUET, Didier, F-92240 Malakoff (FR)
(74) Mandataire: Vieillefosse, Jean-Claude
(86) Numéro de dépôt international: PCT/FR2003/001995
(87) Numéro de publication internationale: WO 2004/004091

(56) Documents cités:
- EP-A- 1 146 621
- WO-A-99/26330
- DE-A- 10 103 200
- DE-A- 19 546 633
- DE-A- 19 839 174
- US-A- 5 610 496
- US-A- 5 689 412
- US-A- 5 914 585
- US-A- 6 137 280
- US-A1- 2002 113 578
- US-B1- 6 504 343

## Description

La présente demande concerne un chargeur et un système de recharge suivant le préambule de la revendication 1.

Il existe aujourd'hui de nombreux appareils électriques portables et autonomes. Ils sont autonomes grâce à une batterie électrique rechargeable qu'ils incorporent. Ces appareils sont, à titre d'exemple, les téléphones mobiles, agendas électroniques ou assistants personnels (PDA ou Personal Digital Assistant), les ordinateurs portables,... Dans le cas des téléphones mobiles, pour établir une communication avec les mains libres, les téléphones peuvent être équipés d'une oreillette incorporant un microphone et un haut-parleur. Ils permettent des échanges vocaux sans conserver le téléphone portable près de l'oreille et de la bouche.

Dans leur utilisation, du fait de leur portabilité, ces appareils ne sont reliés par aucun raccordement filaire. Les transmissions d'informations entre les différents appareils sont par exemple réalisées par des liaisons sans fil de type transmission Bluetooth.

Un inconvénient de ces appareils électriques est la limitation de leur autonomie à cause de la capacité de stockage d'énergie de leur batterie ou de leur accumulateur. Par conséquent, l'utilisateur de ces appareils doit régulièrement penser à les recharger à l'aide d'un chargeur, raccordé au réseau électrique basse tension.

Chaque appareil électrique portable est actuellement conçu avec son propre chargeur lui permettant de se raccorder au réseau électrique. Ces chargeurs sont chacun compatibles avec leur propre appareil portable.

Les chargeurs sont donc spécifiques, aussi bien quant à leur forme qu'à leur moyen de raccordement et à leur type de connexion. On comprend aisément que le chargeur d'un PDA ne soit pas conçu comme le chargeur d'une oreillette téléphonique, du fait de la différence de branchement et de puissance électrique des deux équipements à recharger.

Par conséquent, cela multiplie le nombre d'équipements de recharge de ces appareils électriques portables. La multiplicité de ces équipements de charge augmente les coûts, en particulier pour l'utilisateur qui doit se les procurer lors de l'achat de chaque appareil. La multiplicité de ces équipements de charge augmente aussi l'encombrement, ce qui est particulièrement gênant pour l'utilisateur en voyage.

La société Targus propose un produit référencé Targus Universal Auto/Air Notebook Power Adapter permettant de charger différents types d'appareils mobiles rechargeables. Cet équipement contrôle le voltage correspondant au besoin de l'appareil mobile et recharge l'appareil en conséquence.

L'inconvénient de cet équipement est que l'utilisateur risque d'oublier de recharger l'un de ses appareils portables et de le trouver hors service par manque d'alimentation au moment de l'utilisation de celui-ci.

Il y a donc un besoin pour les utilisateurs en un équipement de recharge permettant de réduire le risque d'oublier de recharger un de ses appareils portables.

Pour cela la demande propose un chargeur portable comprenant une connexion à une source électrique, une pluralité de points de branchement d'appareils portables rechargeables à usage différent, et un adaptateur, prélevant une alimentation à la source électrique et l'adaptant à l'alimentation de recharge des appareils portables rechargeables. Un tel chargeur est décrit dans le document WO 9 926 330.

Selon une variante, l'adaptateur peut comprendre un microprocesseur et un convertisseur multi-sorties.

De préférence, le convertisseur multi-sorties peut délivrer des tensions et courants adaptés aux appareils à recharger.

Selon une variante, un point de branchement peut être du type RJ 45. Alternativement, un point de branchement est un ruban tissé.

La demande se rapporte aussi à un dispositif de recharge comprenant un chargeur tel que décrit précédemment, une pluralité d'appareils portables rechargeables à usages différents reliés au chargeur.

Avantageusement, le chargeur peut être relié par un cordon adapté à un allume-cigare ou adapté au réseau électrique.

Selon une variante un point de branchement du chargeur peut être un ruban tissé coopérant avec un autre ruban tissé différemment sur un des appareils portables, les rubans s'agrippant par contact. De préférence, les rubans peuvent comprendre des fibres conductrices de l'alimentation de recharge.

Selon une variante, les appareils portables peuvent être fixés par aimantation sur le chargeur.

Selon une variante, les appareils portables et le chargeur peuvent chacun avoir un aimant avec une polarité Nord-Sud. Alternativement, les appareils portables peuvent comporter une pièce en fer doux coopérant avec un aimant sur le chargeur, ou inversement.

Selon une variante, un premier appareil peut être relié à un deuxième appareil, le premier appareil reliant le deuxième appareil au chargeur.

Selon une variante le dispositif peut en outre comprendre un ordinateur relié au chargeur, l'adaptateur adaptant l'alimentation de charge à l'appareil portable en fonction d'un programme de charge délivré par l'ordinateur.

Avantageusement, les appareils portables rechargeables sont du type comprenant au moins un accumulateur rechargeable.

D'autres caractéristiques et avantages de l'invention apparaîtront à la lecture de la description détaillée qui suit des modes de réalisation de l'invention, donnés à titre d'exemple uniquement et en référence aux figures qui montrent :
- figure 1, un chargeur selon un mode de réalisation ;
- figure 2, un dispositif de recharge comprenant le chargeur de la figure 1 ;
- figures 3 à 5, un exemple de branchement entre appareils portables selon l'invention ;
- figure 6, un exemple de détection de branchement sur le chargeur d'un appareil à recharger selon l'invention.

La demande se rapporte à un chargeur portable sur le lequel une pluralité de d'appareils portables rechargeables à usages différents peuvent être branchés. Le chargeur adapte l'alimentation de recharge à chaque appareil. L'invention permet de recharger différents appareils rechargeables de manière simultanée et adaptée à chaque appareil. Le risque d'oubli par l'utilisateur de recharger un appareil portable rechargeable est réduit. Par ailleurs, l'invention évite à l'utilisateur d'avoir à gérer la recharge successive des différents appareils portables ; l'utilisateur peut ainsi recharger simultanément ses appareils toute la nuit sans les permuter sur le chargeur.

Par opération de charge ou recharge, on entend aussi l'opération d'alimentation des appareils portables.

Par appareils portables rechargeables on entend des appareils fonctionnant avec une batterie ou accumulateur pouvant être chargé à nouveau. La batterie ou accumulateur peut être dissociable ou non de l'appareil. Les appareils peuvent être emportés avec soi. Par « usages différents » on entend des appareils destinés à des utilisations différentes d'un appareil à l'autre. Par exemple, un ordinateur portable, un téléphone mobile, un agenda électronique sont des appareils destinés à des usages différents.

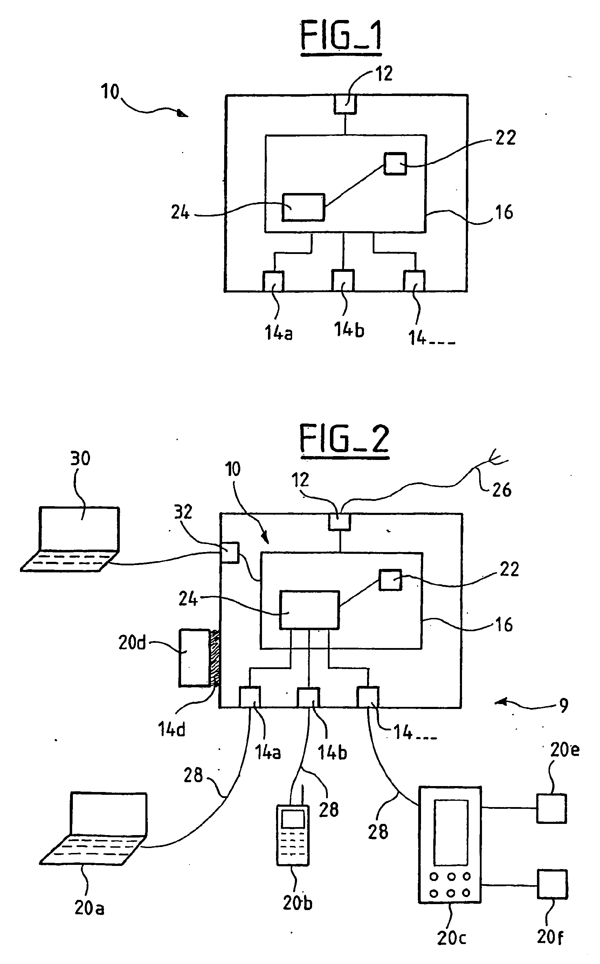

La figure 1 montre un chargeur 10. Le chargeur 10 portable comprend une connexion 12 à une source électrique. Le chargeur 10 comprend aussi une pluralité de points de branchement 14a, 14b, ... d'appareils portables rechargeables à usages différents. Le nombre de points de branchement peut varier en fonction de la taille du chargeur ; le chargeur comprend au moins deux points de branchement, chacun destiné au branchement d'un appareil. Le chargeur 10 comprend en outre un adaptateur 16 prélevant une alimentation à la source électrique et l'adaptant à l'alimentation de recharge des appareils portables rechargeables.

Le chargeur 10 est un convertisseur de tension fournissant un courant redressé à basse tension pour la charge d'accumulateurs. Avantageusement, le chargeur 10 est un chargeur portable, destiné à être emporté avec soi. La taille du chargeur dépend du nombre de points de branchement. L'avantage est que l'utilisateur peut emporter uniquement le chargeur 10 en voyage afin d'être en mesure de charger tous ces appareils portables rechargeables.

La connexion 12 permet au chargeur de prélever une alimentation pour recharger les appareils 20a, 20b,... La connexion 12 permet de brancher le chargeur 10 sur le réseau électrique basse tension 230 V ou sur l'allume-cigare 12 V d'un véhicule. Le chargeur 10 étant portable, l'utilisateur peut recharger ses appareils portables en voiture alors qu'il est en voyage. Un autre avantage de l'unicité du chargeur 10 est qu'il n'occupe qu'une prise de courant pour prélever l'alimentation au lieu que chaque appareil monopolise une prise de courant ou que l'utilisateur utilise une prise multiple. Par ailleurs, les prises de courant étant différentes d'un pays à l'autre, l'utilisateur a besoin d'un adaptateur pour adapter ses prises lorsqu'il voyage à l'étranger. Ainsi, un autre avantage de l'unicité du chargeur 10 est qu'à l'étranger, l'utilisateur n'a besoin que d'un adaptateur pour recharger tous ses appareils portables.

Les points de branchement 14a, 14b, ... permettent de brancher et recharger une pluralité d'appareils portables indépendamment de leur forme et sans séparer l'accumulateur de l'appareil portable. L'avantage est que les appareils n'ont pas à être enfichés dans le chargeur 10 ce qui permet de réduire la taille du chargeur 10. Les points de branchement 14a, 14b,... peuvent être de différents types. Par exemple, il peut s'agir d'un point de branchement de type RJ 45. Ce type de point de branchement est dit « universel » et se généralise de plus en plus sur les divers équipements de communication. Les points de branchement de type RJ 45 permettent d'effectuer un détrompage électrique pour détecter le programme de charge à appliquer à l'appareil 20a, 20b,... Pour cela, les appareils portables peuvent utiliser des fiches de connexion différentes du point de branchement RJ 45. Des fiches de connexion différentes d'un même point de branchement RJ 45 sont à disposition des appareils portables. Par exemple, un ordinateur portable utilisera deux fiches différentes d'un téléphone portable, ce qui permet au chargeur 10 de détecter le type d'appareil portable branché. Les points de branchement de type RJ 45 peuvent comporter un détrompeur par construction, pour la sécurité des branchements et la reconnaissance du type de charge

Selon d'autres modes de réalisation, les points de branchement 14a, 14b,... peuvent être des aimants ou des rubans tissés. La nature des points de branchement sera expliquée plus en détail ci-dessous dans le cadre du dispositif de recharge.

L'adaptateur 16 permet au chargeur 10 d'être compatible avec des appareils rechargeables portables admettant des programmes de charges différents. Par exemple, l'adaptateur 16 permet au chargeur 10 de recharger aussi bien un ordinateur portable admettant un courant de charge de 3A et une tension de charge de 19 V qu'un téléphone portable admettant un courant de charge de 700 mA et une tension de charge de 5 V. L'adaptateur 16 comprend par exemple un microprocesseur 22 et un convertisseur multi-sorties 24.

Le convertisseur multi-sorties 24 permet de convertir l'alimentation prélevée par le chargeur à la source électrique. Le convertisseur 24 permet de produire une pluralité de basses tensions et un courants continus adaptés au programme de recharge des appareils portables. Le convertisseur 24 délivre ces tensions de recharge en plusieurs sorties reliées aux points de branchement 14a, 14b,.., ce qui permet de recharger simultanément plusieurs appareils rechargeables. Le convertisseur 24 peut délivrer des tensions de recharge comprises, par exemple, entre 1,2 V et 20 V et des courants continus de 0 A à 5 A. Ces plages d'alimentation permettent de recharger à la fois une oreillette ayant un programme de charge prévu avec une tension de 1,2 V et un courant de 0,1 A et un ordinateur portable ayant un programme de charge prévu avec une tension de 19 V et un courant de 3 A. Le convertisseur est par exemple du type isolé par transformateur et à découpage haute-fréquences. La régulation de tension se fait par modulation de la largeur de découpage. Plusieurs sorties de tensions peuvent être obtenu par des postes régulateur à découpage de type non-isolé.

Le microprocesseur 22 permet d'adapter la conversion de l'alimentation effectuée par le convertisseur 24 au programme de charge de chacun des appareils rechargeables. Avantageusement, l'adaptateur adapte l'alimentation de charge à l'appareil portable en fonction d'un programme délivré au chargeur. Ceci permet d'éviter de mémoriser les programmes de charge dans le microprocesseur 22, permettant ainsi de prévoir un microprocesseur avec une capacité de mémorisation moindre et donc un microprocesseur de dimensions et de coût moindres. Par ailleurs, ceci permet d'éviter de se trouver dans une situation où le chargeur ne possède pas de programme de charge mémorisé et adapté à l'appareil portable à recharger. Ainsi, le chargeur est toujours adapté aux appareils à recharger. Le chargeur est universel. Le chargeur s'adapte automatiquement au programme de charge des appareils portables. Ceci permet aussi d'éviter les opérations préalables de programmation du microprocesseur qui sont longues. Grâce au microprocesseur 24, les appareils rechargeables peuvent être rechargés indépendamment les uns des autres. Divers programmes de charge peuvent être délivrés simultanément au chargeur, ce qui permet la recharge simultanée de plusieurs appareils. La reconnaissance préalable de l'appareil connecté peut se faire, par exemple, par émission d'un signal alternatif de faible puissance et lecture d'une réponse caractéristique de l'appareil (mesure de l'impédance du circuit électrique interne à l'appareil, envoi d'impulsion par l'appareil...). La reconnaissance de l'appareil permet au microprocesseur de déterminer le programme de charge de l'appareil.

Avantageusement, les appareils portables ont chacun leur programme de recharge. Les appareils portables contiennent leur propre programme de charge mémorisé en eux. Les appareils portables sont adaptés à envoyer leur programme de charge vers le chargeur et le configurer. Le chargeur s'adapte alors au programme de charge délivré au chargeur par les appareils portables.

Selon un mode de réalisation du chargeur 10, celui-ci peut détecter et signaler visuellement ou par un signal sonore, le passage du courant et l'état correct ou non (état incorrect) des contacts (en cas de salissure trop importante sur le chargeur ou/et sur les appareils). La détection peut être réalisée par exemple par la mesure de l'augmentation anormale de la chute de tension entre les points de branchement du chargeur 10 et ceux des appareils rechargeables. Avantageusement, une telle détection est prévue pour chacun des points de branchement 14a, 14b,... du chargeur 10 de sorte à être en mesure de détecter individuellement pour chaque appareil toute anomalie lors de la recharge.

La demande se rapporte aussi à un dispositif de recharge comprenant le chargeur 10 et une pluralité d'appareils portables rechargeables à usages différents et reliés au chargeur 10. La figure 2 montre le dispositif de recharge comprenant le chargeur 10 de la figure 1.

Le chargeur 10 peut être relié par l'intermédiaire de la connexion 12 et d'un cordon 26 adapté à un allume-cigare ou adapté au réseau électrique du secteur. Le chargeur 10 peut aussi être branché à même une prise du secteur ; la connexion 12 comprend alors une fiche enfichable dans la prise.

Les appareils portables rechargeables sont par exemple (et à titre non limitatif) choisis parmi un agenda électronique, un ordinateur portable, un téléphone mobile, une oreillette, un stylo électronique, un bloc radio, des lunettes à écran projeté. Les lunettes à écran projeté comprennent une pluralité d'écrans face à la rétine de l'utilisateur, les écrans remplaçant un écran de terminal. Plus généralement, les appareils sont du type à accumulateur rechargeable.

Les appareils portables 20a, 20b,... peuvent être reliés au chargeur 10 par l'intermédiaire d'un cordon 28. Le cordon souple permet la poursuite de l'utilisation des appareils portables 20a, 20b,... pendant leur recharge en énergie électrique. Les cordons 28 permettent également de brancher différents appareils portables ne présentant pas les mêmes organes de raccordement.

Pour brancher les cordons sur le chargeur 10, ce dernier peut avantageusement comporter des points de branchement de branchement de type RJ 45. L'utilisation de points de branchement de ce type permet une compatibilité et une adaptation à un grand nombre de matériels ainsi qu'aux appareils des générations à venir. Ainsi les cordons 28 peuvent présenter à une extrémité une fiche du type RJ 45 compatible avec le point de branchement du chargeur 10, et à l'autre extrémité une fiche compatible avec un point de branchement propre à l'appareil portable. Avantageusement, les cordons ont une fiche de type RJ 45 à chaque extrémité, le chargeur 10 et les appareils portables ayant alors des points de branchement de type RJ 45 compatibles. L'avantage est qu'un seul type de cordon suffit pour brancher tous les appareils.

Il peut être également avantageux qu'au moins un cordon 28 soit monobloc avec le chargeur 10. Le point de branchement du chargeur est alors à l'extrémité libre du cordon. Ceci permet d'éviter que l'utilisateur oublie ou égare le cordon.

Un autre mode de réalisation de la connexion des appareils portables 20a, 20b, ... sur le chargeur 10 consiste en des rubans s'agrippant par contact. Un point de branchement 14d du chargeur 10 est un ruban tissé coopérant avec un autre ruban tissé différemment sur un des appareils portables 20d. Les rubans s'agrippent par contact assurant une connexion mécanique entre l'appareil 20d et le point de branchement 14d. Les rubans peuvent incorporer des fibres conductrices de l'alimentation de recharge. Les fibres conductrices sont entremêlées avec les fibres classiques en plastique, ce qui évite les zones de métallisation et les contacts à lames élastiques. Alternativement, les rubans peuvent être en matériau plastique conducteur. Pour effectuer la recharge, le chargeur 10 et l'appareil 20d comportent chacun deux rubans afin de fermer le circuit de recharge. L'avantage d'une telle connexion est de permettre une connexion sans alignement précis entre le chargeur et l'appareil portable.

Dans le cas de la connexion à l'aide de rubans, les polarités des contacts risquent d'être inversées. Pour contrer l'inversion de polarité, les appareils peuvent comporter un pont de diodes, de préférence quatre diodes, dont les entrées sont les deux zones de contacts électriques sur l'appareil, pour récupérer en sortie du pont les bonnes polarités de recharge de la batterie.

Afin d'améliorer la connexion à l'aide de rubans, ou plus généralement, pour améliorer la connexion de zones métalliques assurant la recharge, les appareils portables peuvent être fixés par aimantation sur le chargeur 10. Un aimant sur le chargeur coopère avec une pièce en fer doux sur l'appareil, ou inversement. Ceci permet d'assurer une pression de contact des zones métalliques assurant la recharge. Avantageusement, le chargeur et les appareils comportent chacun un aimant avec une polarité Nord-Sud. La polarité des aimants permet d'éviter l'inversion de polarité des contacts. En effet, l'utilisateur est guidé par la polarité des aimants lors du branchement de l'appareil portable sur le chargeur.

Un autre mode de réalisation de la connexion des appareils portables 20a, 20b, ... sur le chargeur 10 concerne la connexion d'appareils type d'un stylo électronique. Ce stylo est par exemple équipé d'un lecteur optique permettant, entre autre, de scanner un texte ou un dessin et d'émettre le résultat par radio, par exemple par une transmission de type Bluetooth. Ainsi pour la recharge d'un appareil du type d'un stylo, le chargeur peut comprendre une fente ou un trou dans lequel le stylo est introduit. Les points de branchement du chargeur 10 sont par exemple des lames conductrices élastiques dans le trou ou la rainure, et qui viennent en contact des points de branchement du stylo, par exemple sous forme de bague métallique autour du stylo ou de bandes métalliques le long du stylo.

Selon un mode de réalisation, le chargeur 10 comporte une connexion 32 à un ordinateur 30. L'ordinateur 30 permet d'adapter l'alimentation du chargeur 10 aux appareils portables rechargeables en fonction d'un programme de charge délivré par l'ordinateur 30. L'ordinateur reconnaît l'appareil portable à recharger par un moyen tel que décrit précédemment, et peut ainsi délivré au chargeur un programme de charge spécifique à l'appareil. Avantageusement, le chargeur comporte une liaison entre la connexion 32 et les points de branchement 14a, 14b,... de sorte qu'un échange de données puisse avoir lieu entre l'ordinateur 30 branché sur la connexion 32 et un ou plusieurs appareils portables 20a, 20b,... Ce cas de figure est particulièrement intéressant lorsque un appareil du type agenda digital ou assistant personnel (PDA) est branché sur le chargeur. Une mise à jour des données entre l'agenda et l'ordinateur est ainsi possible. La liaison entre l'ordinateur 30 et le chargeur 10 est par exemple de type USB. La liaison de type USB est adaptée à transmettre des données permettant d'adapter et réguler la recharge, éventuellement en plus de la mise à jour de données.

Selon une variante, l'ordinateur est adapté à délivrer un programme de charge depuis le réseau Internet. L'ordinateur est susceptible d'aller chercher automatiquement des programmes de recharge sur un serveur Internet. Ceci permet d'éviter la mémorisation du programme de recharge tant sur l'appareil portable que sur le chargeur.

Selon une autre variante de mise à jour de données, le chargeur 10 comporte une liaison entre deux points de branchement 14a, 14b,... ou plus de telle sorte que des données soient mises à jour entre au moins deux appareils 20a, 20b,..., tels un ordinateur et un agenda tous deux en cours de charge sur le chargeur 10.

Selon un mode de réalisation, le dispositif 9 de recharge peut permettre de recharger un ou des appareils portables 20e, 20f en les branchant sur un appareil portable 20c, l'appareil portable 20c étant lui-même branché sur le chargeur 10. Les appareils portables 20e, 20f sont chargés par l'intermédiaire de l'appareil 20c. Ceci permet à l'utilisateur de n'utiliser qu'un chargeur 10 et de lui éviter d'oublier de recharger un de ses appareils portables. Ce mode de réalisation est avantageux lorsque des appareils portables rechargeables fonctionnent de paire. Ceci est en particulier avantageux lorsque les appareils portable chargés par l'intermédiaire d'un premier appareil ne possèdent pas de point de branchement leur permettant d'être branchés sur le chargeur.

Ce mode de réalisation va être décrit à titre d'exemple non limitatif dans une application avec un PDA (Personnal Digital Assistant) avec ses équipements. Parmi les équipements 20e, 20f possibles, un bloc 20e d'émission/réception radio, qui est prévu pour être enfiché sur le PDA 20c et établir des transmissions ou des communications par l'intermédiaire du réseau de télécommunication avec les mobiles. Le bloc radio 20e peut être en liaison avec un réseau pour les mobiles de tout type, tel que le réseau GPRS (General Packet Radio Service, ou service général de radiocommunication en mode paquet), le réseau GSM (Global System for Mobile communications, ou système global pour les communications avec les mobiles) ou le réseau UMTS (Universal Mobile Telecommunications System, ou système universel de télécommunications avec les mobiles), etc... Egalement, une oreillette 20f peut être fournie pour permettre la communication par le bloc radio. Par ailleurs, un stylo peut être aussi fourni avec le PDA pour la sélection d'une commande ou pour l'entrée de données sur l'écran du PDA. Lorsque l'utilisateur ne souhaite pas s'équiper d'une oreillette, qui est un appareil portable supplémentaire, le stylo peut faire office d'oreillette. Le stylo incorpore alors un microphone et un haut-parleur de petite taille.

Les équipements 20e, 20f du PDA pouvant chacun incorporer une batterie rechargeable, il est avantageux que les équipements 20e, 20f du PDA 20c puissent être reliés au PDA et être rechargés par le chargeur 10 en même temps que le PDA. Le PDA peut alors comporter une liaison électrique permettant de relier les équipements au chargeur 10 lorsque le PDA est lui-même branché sur le chargeur 10. Les équipements sont reliés au chargeur 10 par l'intermédiaire du PDA. Ce mode de réalisation permet d'éviter d'oublier de recharger un des équipements. Ce mode de réalisation permet aussi d'effectuer la recharge des appareils par un seul chargeur.

La connexion d'appareils portables 20e, 20f à un autre appareil portable 20c peut être réalisée selon les mêmes modes de réalisation que ceux décrit ci-dessus dans le cadre de la connexion des appareils portables sur le chargeur 10. La connexion par rubans ou aimants, ou par introduction dans une fente ou un trou présente l'avantage de permettre de fixer les équipements sur un appareil et de simultanément les charger lorsque l'appareil est en charge.

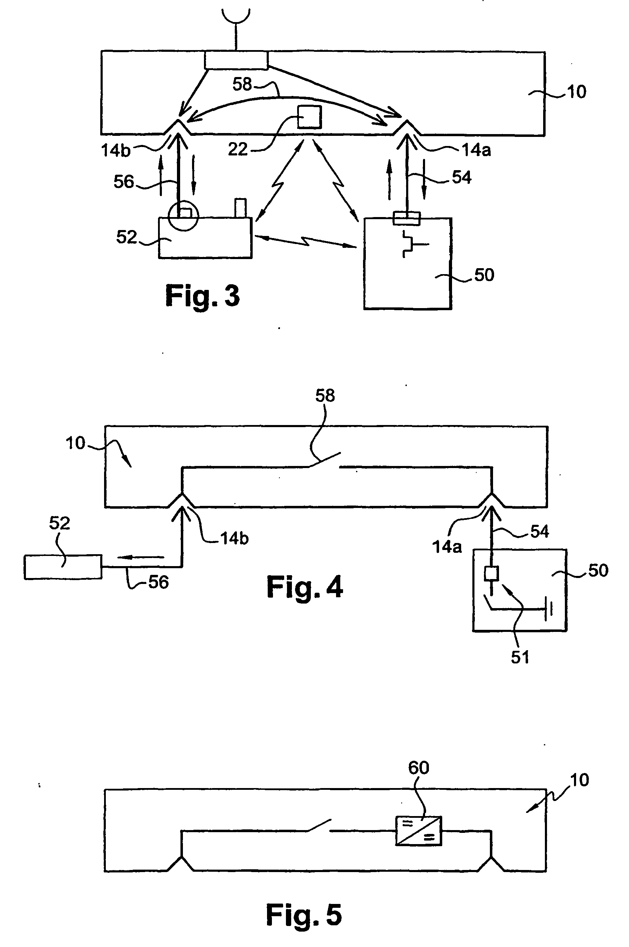

Avantageusement, selon l'invention, le chargeur 10 adapte un appareil portable récepteur à un appareil portable source. Ceci permet aux appareils portables de s'entraider via le chargeur. Les figures 3 à 5 montrent un exemple de branchement entre appareils portables. Ceci est avantageux pour les appareils non interconnectables directement entre eux.

La figure 3 montre le chargeur 10 adaptant les interfaces entre un appareil source 50 et un appareil récepteur 52. Selon un aspect de l'entraide, l'appareil récepteur 52 est adapté à se recharger sur l'appareil source 50, notamment lorsque le chargeur n'est pas branché à une source de tension et que l'appareil 50 est suffisamment chargé. Ceci peut être avantageux dans le cas où l'appareil à charger est de petite dimension, ce qui ne lui permet pas de stocker beaucoup d'énergie. Selon un autre aspect, alternatif ou cumulatif au premier aspect, l'appareil source 50 peut communiquer des données à l'appareil récepteur 52 alors que les interfaces ne sont pas compatibles entre eux.

La figure 3 montre l'appareil source 50 et l'appareil 52 récepteur qui sont relié respectivement par une liaison 54 et une liaison 56. Les points de branchement 14a, 14b et les liaisons peuvent être tels que ceux précédemment décrits. Les liaisons peuvent permettre le passage de courant de recharge et/ou de données. Les liaisons peuvent être des cordons de transmission de puissance, et/ou des liaisons USB. Des doubles flèches le long des liaisons témoignent d'une circulation dans les deux sens. Ceci est en particulier avantageux dans le cas de transmission de données sous forme d'échanges entre les appareils. La correspondance entre les appareils 50 et 52 est transmise par l'intermédiaire du chargeur 10, telle que représentée par la double flèche 58. La correspondance transite ou non par l'intermédiaire du microprocesseur 22. Par ailleurs, les appareils 50 et 52 et le chargeur 10 (éventuellement avec le microprocesseur 22) peuvent correspondre entre eux deux à deux où tous ensemble, par une transmission radio sans fil de type bluetooth ou WiFi. Ceci peut être intéressant dans le cas de la recharge de l'appareil récepteur 52, ce dernier informant l'appareil source 50 du programme de charge à mettre en oeuvre ou de la fin de la recharge. Egalement, et dans le cas le plus général de la recharge d'un appareil portable par le chargeur, l'appareil portable peut transmettre au chargeur par une transmission radio sans fil le programme de charge à mettre en oeuvre. Les appareils délivrent au chargeur ou aux autres appareils portables leur programme de charge par radio.

La figure 4 montre un mode de réalisation de l'entraide. En particulier, lorsque l'entraide est destinée à recharger l'appareil récepteur 50, la figure 4 montre un mode de sécurisation contre le déchargement intempestif de l'appareil source 50. Ceci peut être le cas lorsque l'appareil source 50 est court-circuité, par exemple dans une poche par une clef. Une application logicielle 51 dans l'appareil 50 déclenche une fonction interrupteur 58 dans le chargeur 10 pour que l'appareil 50 alimente l'objet 52 en passant par le chargeur 10. L'appareil 50 ne bascule en mode générateur que s'il y a détection du branchement de l'appareil source avec le chargeur 10, qui autorise l'alimentation de l'appareil récepteur 52 par l'appareil source 50. Ceci permet à l'appareil 50 de se décharger uniquement au profit de la charge d'un autre appareil.

La figure 5 montre un autre mode de réalisation de l'entraide. Après la fonction interrupteur 58, le chargeur 10 comporte en plus un convertisseur 60, par exemple continu-continu, adaptant la puissance de charge de l'appareil 50 vers l'appareil 52.

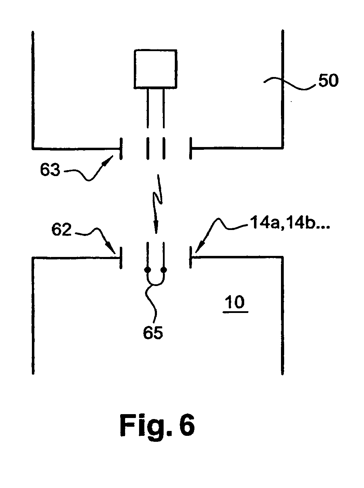

La figure 6 représente un exemple de détection de branchement sur le chargeur 10 d'un appareil portable 50 source susceptible de délivrer une puissance à un appareil récepteur à recharger. Cette détection de branchement évite le déchargement intempestif de l'appareil, notamment par le court-circuit provoqué par une clef dans une poche. La figure 6 montre le chargeur 10 et l'appareil 50 reliés entre par un moyen ou un autre. Le chargeur 10 est relié à un ou des points de branchement 14a, 14b, ... Les points de branchement comporte plusieurs fiches 62 de connexion. L'appareil comporte lui aussi plusieurs fiches 63 de connexion. Dans l'exemple, il y a quatre fiches 62, 63 de connexion à brancher entre elles. Egalement, les fiches 63 peuvent être à une extrémité du cordon 28. Le chargeur 10 comporte notamment deux fiches 62, au centre des fiches 62, reliées entre elles par un pontage 65. Lorsque un appareil est branché au chargeur, un circuit est fermé par le pontage 65 sur l'appareil 50 qui est averti de son branchement sur le chargeur 10. Ceci permet d'avertir l'appareil portable source qu'il n'est pas en court-circuit mais qu'il est bien branché sur le chargeur et qu'il est appelé à délivrer une puissance de recharge vers un appareil récepteur. Les fiches 62, 63 sur les côtés permettent le passage de la puissance, ou autre.

Bien entendu, la présente invention n'est pas limitée aux modes de réalisations décrits à titre d'exemple. Ainsi, les modes de fixation des appareils portables sur le chargeur selon l'invention pourraient être réalisés indépendamment du chargeur décrit. De même, la connexion d'appareils portables sur d'autres appareils portables afin de tous les recharger par un seul chargeur peut être réalisée indépendamment du chargeur décrit.

## Revendications

1. Un dispositif (9) de recharge comprenant un chargeur (10) portable comprenant
- une connexion (12) à une source électrique,
- une pluralité de points de branchement (14a, 14b...) d'appareils portables rechargeables à usage différent, et
- un adaptateur (16), prélevant une alimentation à la source électrique et l'adaptant à l'alimentation de recharge des appareils portables rechargeables, l'adaptateur (16) comprenant
un microprocesseur (22) et
un convertisseur (24) multi-sorties délivrant des tensions et courants adaptés aux appareils à recharger,
l'adaptateur adaptant l'alimentation de charge à l'appareil portable en fonction d'un programme de charge délivré au chargeur,
le chargeur (10) étant destiné à être relié à une pluralité d'appareils portables rechargeables (20a, 20b,..) à usages différents, **caractérisé en ce que,** le chargeur comprend des moyens pour adapter un appareil portable récepteur (52) à un appareil portable source (50).

2. Le dispositif selon la revendication 1, **caractérisé en ce que** le chargeur est adapté à détecter et signaler par un signal visuel ou sonore l'état incorrect d'un contact de branchement.

3. Le dispositif selon l'une des revendications 1 à 2, **caractérisé en ce que** les appareils ont chacun leur programme de recharge.

4. Le dispositif selon l'une des revendications 1 à 3, **caractérisé en ce que** un premier appareil (20c) est relié à un deuxième appareil (20e, 20f), le premier appareil (20c) reliant le deuxième appareil (20e, 20f) au chargeur (10).

5. Le dispositif selon la revendication 4, **caractérisé en ce que** le deuxième appareil est chargé par l'intermédiaire du premier appareil.

6. Le dispositif selon l'une des revendications 1 à 5, **caractérisé en ce que** le dispositif comprend en outre un ordinateur (30) relié au chargeur (10), l'adaptateur (16) adaptant l'alimentation de charge à l'appareil portable en fonction d'un programme de charge délivré par l'ordinateur (30).

7. Le dispositif selon la revendication 6, **caractérisé en ce que** l'ordinateur reconnaît l'appareil portable à recharger.

8. Le dispositif selon la revendication 7, **caractérisé en ce que** l'ordinateur est adapté à délivrer un programme de charge depuis le réseau Internet.

9. Le dispositif selon l'une des revendications 4 à 8, **caractérisé en ce que** la liaison entre l'ordinateur et le chargeur est du type USB.

10. Le dispositif selon l'une des revendications 1 à 9, **caractérisé en ce que** l'appareil portable récepteur (52) est adapté à se recharger sur l'appareil source (50) par l'intermédiaire du chargeur (10).

11. Le dispositif selon la revendication 10, **caractérisé en ce que** l'appareil source (50) est adapté à déclencher une fonction interrupteur (58) dans le chargeur (10) et à basculer en mode générateur que s'il y a branchement de l'appareil source (50) avec le chargeur (10).

12. Le dispositif selon l'une des revendications 10 ou 11, **caractérisé en ce que** le chargeur (10) comporte en outre un convertisseur (60) adaptant la puissance de charge de l'appareil (50) vers l'appareil (52).

13. Le dispositif selon l'une des revendications 1 à 12, **caractérisé en ce que** les appareils délivrent au chargeur ou aux autres appareils portables leur programme de charge par radio.

## Claims

1. Recharging device (9) comprising a portable charger (10) comprising
- a connection (12) to an electrical source,
- a plurality of connection points (14a, 14b, etc.) for rechargeable portable appliances for different uses, and
- an adapter (16), taking a power supply from the electrical source and adapting it to the recharging power supply for the rechargeable portable appliances, the adapter (16) comprising
a microprocessor (22) and
a multiple-output converter (24) delivering voltages and currents suited to the appliances to be recharged,
the adapter adapting the charging power supply to the portable appliance according to a charging program delivered to the charger,
the charger (10) being designed to be linked to a plurality of rechargeable portable appliances (20a, 20b, etc.) for different uses, **characterized in that,** the charger comprises means for adapting a receiving portable appliance (52) to a source portable appliance (50).

2. Device according to Claim 1, **characterized in that** the charger is designed to detect and signal by a visual or audible signal the incorrect state of a connection contact.

3. Device according to one of Claims 1 or 2, **characterized in that** the appliances each have their recharging program.

4. Device according to one of Claims 1 to 3, **characterized in that** a first appliance (20c) is linked to a second appliance (20e, 20f), the first appliance (20c) linking the second appliance (20e, 20f) to the charger (10).

5. Device according to Claim 4, **characterized in that** the second appliance is charged via the first appliance.

6. Device according to one of Claims 1 to 5, **characterized in that** the device also comprises a computer (30) linked to the charger (10), the adapter (16) adapting the charging power supply to the portable appliance according to a charging program delivered by the computer (30).

7. Device according to Claim 6, **characterized in that** the computer recognizes the portable appliance to be recharged.

8. Device according to Claim 7, **characterized in that** the computer is designed to deliver a charging program from the Internet network.

9. Device according to one of Claims 4 to 8, **characterized in that** the link between the computer and the charger is of USB type.

10. Device according to one of Claims 1 to 9, **characterized in that** the receiving portable appliance (52) is designed to be recharged on the source appliance (50) via the charger (10).

11. Device according to Claim 10, **characterized in that** the source appliance (50) is designed to trigger a switch function (58) in the charger (10) and to switch over to generating mode only if the source appliance (50) is connected to the charger (10).

12. Device according to one of Claims 10 or 11, **characterized in that** the charger (10) also comprises a converter (60) adapting the charging power of the appliance (50) to the appliance (52).

13. Device according to one of Claims 1 to 12, **characterized in that** the appliances wirelessly deliver their charging program to the charger or to the other portable appliances.

## Patentansprüche

1. Ladevorrichtung (9), die ein tragbares Ladegerät (10) aufweist, das enthält
- eine Verbindung (12) mit einer Stromquelle,
- mehrere Anschlusspunkte (14a, 14b, ...) für unterschiedlich genutzte, aufladbare tragbare Geräte, und
- einen Adapter (16), der eine Stromversorgung von der Stromquelle entnimmt und sie an die Aufladeversorgung der aufladbaren tragbaren Geräte anpasst, wobei der Adapter (16) aufweist einen Mikroprozessor (22) und
einen Wandler (24) mit mehreren Ausgängen, der Spannungen und Ströme liefert, die an die aufzuladenden Geräte angepasst sind,
wobei der Adapter die Ladeversorgung an das tragbare Gerät in Abhängigkeit von einem an das Ladegerät gelieferten Ladeprogramm anpasst,
wobei die Vorrichtung außerdem mehrere unterschiedlich genutzte, tragbare aufladbare Geräte (20a, 20b, ...) aufweist, die mit dem Ladegerät (10) verbunden sind, **dadurch gekennzeichnet, dass** das Ladegerät Mittel aufweist, um ein tragbares Empfängergerät (52) mit einem tragbaren Quellengerät (50) zu verbinden.

2. Vorrichtung nach Anspruch 1, **dadurch gekennzeichnet, dass** das Ladegerät angepasst ist, um den unkorrekten Zustand eines Anschlusskontakts zu erfassen und durch ein Sicht- oder Tonsignal anzuzeigen.

3. Vorrichtung nach einem der Ansprüche 1 bis 2, **dadurch gekennzeichnet, dass** die Geräte je ihr Aufladeprogramm haben.

4. Vorrichtung nach einem der Ansprüche 1 bis 3, **dadurch gekennzeichnet, dass** ein erstes Gerät (20c) mit einem zweiten Gerät (20e, 20f) verbunden ist, wobei das erste Gerät (20c) das zweite Gerät (20e, 20f) mit dem Ladegerät (10) verbindet.

5. Vorrichtung nach Anspruch 4, **dadurch gekennzeichnet, dass** das zweite Gerät über das erste Gerät geladen wird.

6. Vorrichtung nach einem der Ansprüche 1 bis 5, **dadurch gekennzeichnet, dass** sie außerdem einen mit dem Ladegerät (10) verbundenen Computer (30) aufweist, wobei der Adapter (16) die Ladeversorgung an das tragbare Gerät in Abhängigkeit von einem Ladeprogramm anpasst, das vom Computer (30) geliefert wird.

7. Vorrichtung nach Anspruch 6, **dadurch gekennzeichnet, dass** der Computer das aufzuladende tragbare Gerät erkennt.

8. Vorrichtung nach Anspruch 7, **dadurch gekennzeichnet, dass** der Computer angepasst ist, um ein Ladeprogramm aus dem Internet zu liefern.

9. Vorrichtung nach einem der Ansprüche 4 bis 8, **dadurch gekennzeichnet, dass** die Verbindung zwischen dem Computer und dem Ladegerät vom Typ USB ist.

10. Vorrichtung nach einem der Ansprüche 1 bis 9, **dadurch gekennzeichnet, dass** das tragbare Empfangsgerät (52) angepasst ist, um sich am Quellengerät (50) über das Ladegerät (10) aufzuladen.

11. Vorrichtung nach Anspruch 10, **dadurch gekennzeichnet, dass** das Quellengerät (50) angepasst ist, um eine Unterbrecherfunktion (58) in dem Ladegerät (10) auszulösen und nur in den Generatormodus umzuschalten, wenn es einen Anschluss des Quellengeräts (50) an das Ladegerät (10) gibt.

12. Vorrichtung nach einem der Ansprüche 10 oder 11, **dadurch gekennzeichnet, dass** das Ladegerät (10) außerdem einen Wandler (60) aufweist, der die Ladeleistung des Geräts (50) an das Gerät (52) anpasst.

13. Vorrichtung nach einem der Ansprüche 1 bis 12, **dadurch gekennzeichnet, dass** die Geräte an das Ladegerät oder an die anderen tragbaren Geräte ihre Ladeprogramme über Funk liefern.
